# EUROPÄISCHE PATENTANMELDUNG

(11) **EP 2 261 596 A1**
(43) Veröffentlichungstag der Anmeldung: **15.12.2010**
(21) Anmeldenummer: 10004475.9
(22) Anmeldetag: 28.04.2010
(51) Int. Cl.: G01B 11/00, G01B 11/02, G01B 11/245, G01S 13/42, B25H 7/00, G01S 17/42, G01C 15/00, B23P 19/00

(54) **Projektionsvorrichtung kombiniert mit einem Distanzmessgerät**

(30) Priorität: 12.06.2009 DE 102009025201
(71) Anmelder: Maierhofer, Konrad, 83365 Nussdorf (DE)
(72) Erfinder: Maierhofer, Konrad, 83365 Nussdorf (DE)
(74) Vertreter: Grättinger Möhring von Poschinger Patentanwälte Partnerschaft

(57) **Zusammenfassung**

Die Erfindung betrifft eine Vorrichtung (1) zur Projektion eines vorgegebenen Musters (17) auf eine in ihrer Geometrie vorbekannte Montagefläche (15), welche einen Laserprojektor (2) zur Projektion des Musters (17) auf die Montagefläche (15), ein separates und auf dem Prinzip der Laufzeitmessung eines diffus reflektierten Laserstrahls (6) basierendes Laserdistanzmessgerät (3), das mit dem Laserprojektor (2) lagefest verbunden ist, wobei die Austrittsrichtung des das Laserdistanzmessgerät (3) verlassenden Laserstrahls (6) fest und unverstellbar vorgegeben ist, eine Antriebseinheit mittels derer der Laserprojektor (2) und das Laserdistanzmessgerät (3) gemeinsam um zwei verschiedene Achsen (N,M) in eine spezifisch vorgebbare Winkellage verschwenk- bzw. rotierbar sind und wenigstens eine Datenverarbeitungseinrichtung zur Steuerung des Laserprojektors (2), des Laserdistanzmessgeräts (3) und der Antriebseinheit umfasst, bei der das Laserdistanzmessgerät (3) und die Datenverarbeitungseinrichtung dazu eingerichtet sind, unter Vermessung der Distanz und Richtung des von dem Laserdistanzmessgerät (3) ausgestrahlten Laserstrahls (6)zu einer Mehrzahl an geeignet auf der Montagefläche (15) zu wählenden Messpunkten (P₁,P₂,P₃,P₄,P₅) die relative Orientierung und Lage zwischen Laserdistanzmessgerät (3) und Montagefläche (15) zu berechnen.

## Beschreibung

Die vorliegende Erfindung betrifft eine Vorrichtung und ein Verfahren zur Projektion eines vorgegebenen Musters auf eine in ihrer Geometrie vorbekannte Montagefläche.

Derartige Vorrichtungen und Verfahren sind aus dem Stand der Technik hinlänglich bekannt und werden in industriellen Fertigungsprozessen, wie z.B. im Flugzeug- oder Schiffsbau, eingesetzt, wo verschiedene Bauteile mit hoher Präzision an einer z.B. durch den Flugzeug- oder den Schiffsrumpf gebildeten Montagefläche angebaut werden müssen. Das mittels der Vorrichtung auf der sich zwei- oder dreidimensional erstreckenden Montagefläche abgebildete Muster dient der visuellen Kennzeichnung derjenigen Stellen bzw. Bereiche auf der Montagefläche, an welchen ein oder mehrere Bauteile - zumeist manuell - zu montieren sind. Die Geometrie der Montagefläche ist vorbekannt und liegt vorteilhaft bereits in computerlesbarer Form (z.B. in Form von CAD-Daten) vor.

Zur Projektion des Musters auf die Montagefläche umfassen die z.B. aus der WO 2006/078684 A2, der US 6,547,397 B1 oder der US 7,306,339 B2 vorbekannten Vorrichtungen der vorgenannten Art einen mittels einer Datenverarbeitungseinrichtung steuerbaren Laserprojektor, der seinerseits eine Laserquelle und zwei geeignet im Strahlengang des Laserstrahls angeordnete und jeweils mittels eines Galvanometers um verschiedene Achsen verschwenkbare Spiegel aufweist.

Um den zumeist besonders hohen Präzisionsanforderungen im Rahmen der Projektion der für verschiedene Montageschritt vorgegebenen Muster gerecht zu werden bedarf es nach Aufstellung der Vorrichtung an ihrem Einsatzort zunächst einer möglichst exakten Bestimmung der Orientierung und Lage des Laserprojektors relativ zur Montagefläche.

Im Stand der Technik erfolgt diese Bestimmung zumeist unter Verwendung einer Mehrzahl an Retroreflektoren, die an vorgegebenen Referenzpunkten der Montagefläche exakt installiert werden müssen. Der Laserstrahl des Laserprojektors wird - unter Auswertung des an den Retroreflektoren zurückreflektierten Lichtsignals - nacheinander möglichst präzise auf die verschiedenen Retroreflektoren ausgerichtet, wobei zu jedem Retroreflektor der Richtungsvektor des Laserstrahls bestimmt wird. Letzterer kann z.B. aus den bekannten Stellsignalen der Galvanometer oder den mittels geeigneter Sensoren bestimmten Stellungen der Galvanometer bestimmt werden. Anschließend lässt sich unter Auswertung dieser Richtungsvektoren und der bekannten Positionen der betreffenden Retroreflektoren - unter Verwendung einfacher und bekannter Rechenalgorithmen - die Relativlage und Orientierung des Laserprojektors zur Montagefläche bestimmen.

Diese Methode ist jedoch in mehrfacher Hinsicht nachteilig. Zum einen kann dabei eine hinreichende Präzision nur unter Auswertung der Richtungsvektoren zu einer größeren Anzahl an verschiedenen Referenzpunkten erzielt werden, weshalb in der Praxis bei diesem Verfahren zumeist die Richtungsvektoren zu mindestens sechs verschiedenen und in ihrer Lage exakt bekannten Referenzpunkten ausgewertet werden. Zum anderen erweist sich die erforderliche Montage einer Mehrzahl an Retroreflektoren als zeit- und arbeitsintensiv, insbesondere wenn zur Erzielung einer hinreichenden Präzision sechs oder mehr Retroreflektoren Verwendung finden.

Aus der US 6,547,397 B1 ist in diesem Zusammenhang ferner die Verwendung eines Laserprojektors bekannt, bei dem neben der Richtung des von dem Laserprojektor ausgesandten Laserstrahls auch die Distanz zu einem den Laserstrahl reflektierenden (kooperativen) "Target" auf der Montagefläche bestimmbar ist, wobei die Distanzmessung auf einer Laufzeitmessung des Laserstrahls beruht. Auch dies ist wegen der nach wie vor erforderlichen Verwendung von separat auf die Montagefläche aufzubringenden Targets nachteilig.

Und schließlich ist aus der US 7,306,339 B2 eine Projektionsvorrichtung bekannt, bei der zur Erzeugung einer mehr oder weniger detailreichen Abbildung der Montagefläche die diffuse Reflektion des von dem Laserprojektor ausgesandten Laserstrahls an der Montagefläche ausgewertet wird.

Ferner ist bei Projektionsvorrichtungen der vorgenannten Art von Zeit zu Zeit auch eine Neukalibrierung des Laserprojektors vonnöten, da verschiedene - einen unerwünschten Offset ergebende - Drift-Effekte die Richtung des ausgesandten Laserstrahls nachteilig beeinflussen. Auf längerer Zeitskala wird eine solche Drift durch Alterungseffekte verursacht. Auf kürzeren Zeitskalen können insbesondere Temperaturschwankungen und/oder mechanische Einflüsse auf die Vorrichtung oder deren Komponenten eine entsprechende Abweichung verursachen. Diese Problematik betrifft insbesondere die Steuerung der Galvanometer, mittels derer die beiden den Laserstrahl ablenkenden Spiegel des Laserprojektors gestellt werden, so dass sich die genannten Effekte im vorstehend diskutierten Stand der Technik auch nachteilig auf die Bestimmung der Lage und Orientierung des Laserprojektors relativ zur Montagefläche auswirken.

Zur Beseitigung des unerwünschten Offsets muss im vorbekannten Stand der Technik ebenfalls auf eine zeit- und arbeitsintensive Auswertung der Reflektion des Laserstrahls an einer Mehrzahl an vorbekannten Referenzpunkten (insbesondere an separat zu montierenden Retroreflektoren bzw. kooperativen Targets) auf der Montagefläche stattfinden, was aufwendig ist.

Schließlich sei einleitend noch angemerkt, dass sich die vorliegende Erfindung insbesondere auf solche Laserprojektionssysteme bezieht, die z.B. innerhalb eines Flugzeugrumpfes oder im Bereich einer sonstigen großformatigen Montagefläche aufgestellt werden, bei denen der (maximale) Projektionsbereich des Laserprojektors nicht die gesamte Montagefläche überdeckt. Unter Projektionsbereich ist dabei derjenige (Winkel-)Bereich zu verstehen, in den ein Laserstrahl ausgesandt werden kann; er entspricht im Stand der Technik typischerweise einem Winkelbereich von ca. ±30°, jeweils in horizontaler und vertikaler Richtung. Für solche Aufgabenstellungen ist es ist es aus dem Stand der Technik bereits bekannt, die Projektionsvorrichtung derart auszugestalten, dass ein Laserprojektor mittels einer Antriebseinheit um eine Raumachse verschwenkbar ist, um eine größere Montagefläche zu überdecken, was jedoch die Bereitstellung und Montage einer Vielzahl an über die gesamte Montagefläche verteilten Retroreflektoren erfordert, damit sich der Laserprojektor in jeder Stellung der Antriebseinheit hinreichend genau gegenüber der Montagefläche "orientieren" kann.

Vor dem Hintergrund des vorstehend erläuterten Standes der Technik ist es die Aufgabe der vorliegenden Erfindung, eine möglichst günstige und präzise Projektionsvorrichtung (und ein Verfahren) der eingangs genanten Art bereitzustellen, die sich unter Verwendung möglichst einfach aufgebauter Vorrichtungskomponenten auf möglichst einfache Art und Weise installieren und kalibrieren lassen.

Diese Aufgabe wird mit einer Vorrichtung zur Projektion eines vorgegebenen Musters auf eine in ihrer Geometrie vorbekannte Montagefläche nach Anspruch 1 gelöst.

Die erfindungsgemäße Vorrichtung umfasst hierzu einen Laserprojektor zur Projektion des Musters auf die Montagefläche, ein separates und auf dem Prinzip der Laufzeitmessung eines diffus reflektierten Laserstrahls basierendes Laserdistanzmessgerät, das mit dem Laserprojektor lagefest verbunden ist, wobei die Austrittsrichtung des das Laserdistanzmessgerät verlassenden Laserstrahls fest und unverstellbar vorgegeben ist, eine Antriebseinheit mittels derer der Laserprojektor und das Laserdistanzmessgerät gemeinsam um zwei verschiedene (bevorzugt senkrecht zueinander orientierte) Achsen in eine spezifisch vorgebbare Winkellage verschwenk- bzw. rotierbar sind, und wenigstens eine Datenverarbeitungseinrichtung zur Steuerung des Laserprojektors, des Laserdistanzmessgeräts und der Antriebseinheit. Ferner ist erfindungsgemäß vorgesehen, dass das Laserdistanzmessgerät und die Datenverarbeitungseinrichtung dazu eingerichtet sind, unter Vermessung der Distanz und Richtung des von dem Laserdistanzmessgerät ausgestrahlten Laserstrahls zu einer Mehrzahl an geeignet auf der Montagefläche zu wählenden Messpunkten die relative Orientierung und Lage zwischen Laserdistanzmessgerät und Montagefläche zu berechnen. Zu beachten ist hierbei, dass die relative Raumlage (= Lage und Orientierung) zwischen Laserdistanzmessgerät und Montagefläche, wie auch diejenige zwischen Laserprojektor und Montagefläche, stets von der aktuellen Stellung der Antriebseinheit abhängig ist, was jedoch aus mathematischer Sicht keine großen Probleme bereitet.

Von vorteilhafter Bedeutung erweist es sich im Rahmen der vorliegenden Erfindung zunächst, dass die relative Raumlage des Laserprojektors zur Montagefläche erfindungsgemäß nicht über eine Auswertung eines von der verstellbaren Optik des Laserprojektors abgelenkten Lichtsignals bestimmt wird. Vielmehr wird im Rahmen der vorliegenden Erfindung bei der Bestimmung der relativen Raumlage ausschließlich das - vorteilhaft keine beweglichen Stellglieder aufweisende - Laserdistanzmessgerät verwendet, aus dessen Raumlage sich - wegen der lagefesten Verbindung von Laserdistanzmessgerät und Laserprojektor - auch die relative Raumlage des Laserprojektors berechnen lässt.

Die Berechnung der relativen Raumlage des Laserdistanzmessgeräts zur Montagefläche beruht auf den (manuell oder automatisch) zu vermessenden Distanzen und Richtungen zu einer Mehrzahl an - im Grunde frei wählbaren - Messpunkten auf der Montagefläche. Da der Laserstrahl das Laserdistanzmessgerät in fest vorgegebener Austrittsichtung verlässt, müssen die verschiedenen Messpunkte auf der Montagefläche durch eine mittels der Antriebseinheit präzise steuerbare Verschwenkung des Laserdistanzmessgeräts (samt Laserprojektor) angefahren werden. Da die Messpunkte jedoch frei wählbar sind (und nicht in ihrer Position vorbekannt sein müssen), ist mit der Auswahl der Punkte kein großer Aufwand verbunden. Die Richtung des von dem Laserdistanzmessgerät ausgesandten Laserstrahls ergibt sich aus der Stellung der Antriebseinheit in beiden Rotations- bzw. Schwenkachsen (und der hierzu bekannten Anordnung und Geometrie des Laserdistanzmessgeräts), die z.B. mittels geeigneter Sensoren (z.B. Winkeldecoder) in präziser Weise bestimmbar ist. Eine Winkelauflösung von mindestens 50000 oder gar mindestens 100000 Inkrementen pro Umdrehung ist anzustreben.

Die solchermaßen vermessenen Messpunkte können dann für die weiteren Berechnungsschritte in ein (virtuelles) Koordinatensystem gelegt werden und - unter Verwendung an sich bekannter Rechenalgorithmen - mit der bekannten Geometrie der Montagefläche abgeglichen und mit dieser in Übereinstimmung gebracht werden, z.B. durch einen so genannten "Best-Fit" der bekannten Montageflächengeometrie in die gemessenen Messpunkte. Ersichtlich erhöht sich hierbei die erzielbare Präzision mit der Anzahl an geeignet ausgewählten Messpunkten. Da auch die Raumlage des Laserdistanzmessgeräts innerhalb des Koordinatensystems bekannt bzw. ermittelbar ist, lässt sich dann dessen (antriebseinheitsstellungsabhängige) Relativlage zur Montagefläche berechnen. Hieraus ergibt sich dann auch diejenige des Laserprojektors, die für die Projektion des vorgegebenen Musters auf die Montagefläche ebenfalls relevant ist.

Mit anderen Worten kann im Rahmen der vorliegenden Erfindung ein einfaches und vergleichsweise kostengünstiges Laserdistanzmessgerät Verwendung finden, dessen Laserstrahl stets in identischer Richtung aus diesem austritt und nicht über bewegliche (und driftanfällige) Spiegel abgelenkt wird. Die erfindungsgemäß vorgesehene Antriebseinheit dient damit in erster Linie der Verstellung der Raumrichtung des von dem Laserdistanzmessgeräts ausgesandten Laserstrahls (indem das gesamte Laserdistanzmessgerät um zwei Achsen in die gewünschte Richtung rotiert bzw. verschwenkt wird). In einem zweiten Aspekt ermöglicht die erfindungsgemäße Antriebseinheit die Projektion geeigneter Muster auf großformatige Montageflächen, wie dies bereits einleitend erwähnt wurde. Von besonderem Vorteil ist hierbei ferner, dass der Laserprojektor auch nach seiner Rotation bzw. Verschwenkung nicht erneut kalibriert oder bezüglich seiner relativen Raumlage zur Montagefläche eingemessen werden muss.

Ferner muss im Rahmen der vorliegenden Erfindung zur Bestimmung der relativen Raumlage des Laserdistanzmessgeräts und/oder des Laserprojektors zur Montagefläche nicht auf eine Montage von Retroreflektoren oder von sonstigen kooperativen (d.h. gut reflektierenden) Targets auf der Montagefläche zurückgegriffen werden. Die erfindungsgemäß realisierte Distanzmessung auf Basis eines nur diffus reflektierten Laserstrahls gestattet die Wahl beliebiger Messpunkte auf der Montagefläche. In einer bevorzugten Ausgestaltung der vorliegenden Erfindung ist vorgesehen, dass der Laserprojektor und das Laserdistanzmessgerät (lagefest) innerhalb eines gemeinsamen Gehäuses der Vorrichtung angeordnet sind. Hierdurch kann die erfindungsgemäß vorgesehene Antriebseinheit an dem (gemeinsamen) Gehäuse angebaut werden, was sich als besonders zweckdienlich erweist.

Weiterhin ist im Rahmen einer weiteren, zweckmäßigen Weiterbildung der vorliegenden Erfindung bevorzugt vorgesehen, dass die Vorrichtung ein einen Retroreflektor aufweisendes Target umfasst und zum Zwecke der Kalibrierung des Laserprojektors zur Durchführung der folgenden Schritte eingerichtet ist:
i) Positionieren des einen Retroreflektor aufweisenden Targets an einer beliebigen Stelle innerhalb des Projektionsbereichs des Laserprojektors und Bestimmen der Lage des Targets und des Retroreflektors relativ zum Laserdistanzmessgerät
ii) Automatisches Ausrichten des Laserstrahls des Laserprojektors auf den Retroreflektor und Bestimmen des Richtungsvektors des Laserstrahls in Bezug auf den Laserprojektor
iii) Nacheinander mehrfaches Ändern der Stellung der Antriebseinheit, wobei der Laserstrahl des Laserprojektors in jeder Stellung der Antriebseinheit erneut auf den ortsfest belassenen Retroreflektor ausgerichtet wird und anschließend der Richtungsvektor des Laserstrahls in Bezug auf den Laserprojektor bestimmt wird
iv) Kalibrieren der zur Projektion eines Laserstrahls auf die Montagefläche notwendigen Steuersignale für den Laserprojektor unter Auswertung der in Schritt ii) und iii) ermittelten Daten.

Bei der vorstehend genannten Einrichtung der erfindungsgemäßen Vorrichtung zum Zwecke der Kalibrierung des Laserprojektors ist von Vorteil, dass erstens nur ein Retroreflektor Verwendung finden muss, der zweitens weitgehend beliebig positionierbar ist und dass drittens insbesondere die Schritte iii) und iv) auch vollautomatisch durchgeführt werden können, so dass der im Stand der Technik notwendige Zeitaufwand zur Kalibrierung des Laserprojektors deutlich reduziert werden kann. Einer nachteiligen Drift oder einem unerwünschten Offset in der Ansteuerung der die Spiegel tragenden Galvanometer des Laserprojektors kann damit - unter Verwendung einfacher Rechenalgorithmen - im Rahmen des die spätere Musterprojektion beeinflussenden Kalibrierungsschrittes wirksam entgegengewirkt werden. Eine hohe Präzision der erfindungsgemäßen Projektionsvorrichtung ist das direkte Ergebnis von deren vorteilhafter Gestaltung.

Die vorliegende Erfindung betrifft ferner auch ein Verfahren zur Projektion eines vorgegebenen Musters auf eine in ihrer Geometrie vorbekannte Montagefläche unter Verwendung einer vorstehend erläuterten Vorrichtung, welches die folgenden Schritte umfasst:
A) Aufstellen der Vorrichtung im Bereich der Montagefläche
B) Nacheinander erfolgendes Ausrichten des Laserstrahls des Laserdistanzmessgeräts auf verschiedene geeignet zu wählende Messpunkte der Montagefläche, indem das Laserdistanzmessgerät mittels der Antriebseinheit so verschwenkt bzw. rotiert wird, bis der Laserstrahl den jeweiligen Messpunkt trifft, und jeweils Bestimmung der Stellung der Antriebseinheit sowie der Entfernung des Messpunkts von dem Laserdistanzmessgerät
C) Berechnen der (antriebseinheitsstellungsabhängigen) Lage und Orientierung des Laserdistanzmessgeräts relativ zur Montagefläche aus den im Schritt B) gewonnenen Daten
D) Projizieren des Musters auf die Montagefläche mittels des Laserprojektors.

Da dieses Verfahren auf den gleichen Gesichtspunkten wie die bereits beschriebene Vorrichtung beruht, kann bezüglich der Vorteile des erfindungsgemäßen Verfahrens auf die vorstehenden Ausführungen in Zusammenhang mit der erfindungsgemäßen Projektionsvorrichtung verwiesen werden. Sämtliche dort genannten Aspekte gelten in gleicher Weise für das erfindungsgemäße Verfahren.

Ferner ist in einer Weiterbildung des erfindungsgemäßen Verfahrens vorgesehen, dass zumindest vor der ersten Projektion eines Musters auf die Montagefläche zum Zwecke der Kalibrierung des Laserprojektors folgende Schritte durchgeführt werden:
E) Positionieren eines einen Retroreflektor aufweisenden Targets an einer beliebigen Stelle innerhalb des Projektionsbereichs des Laserprojektors und Bestimmen der Lage des Targets und des Retroreflektors relativ zum Laserdistanzmessgerät
F) Automatisches Ausrichten des Laserstrahls des Laserprojektors auf den Retroreflektor und Bestimmen des Richtungsvektors des Laserstrahls in Bezug auf den Laserprojektor
G) Nacheinander mehrfaches Ändern der Stellung der Antriebseinheit, wobei der Laserstrahl des Laserprojektors in jeder Stellung der Antriebseinheit erneut auf den ortsfest belassenen Retroreflektor ausgerichtet wird und anschließend der Richtungsvektor des Laserstrahls in Bezug auf den Laserprojektor bestimmt wird
H) Kalibrieren der zur Projektion eines Laserstrahls auf die Montagefläche notwendigen Steuersignale für den Laserprojektor unter Auswertung der in Schritt F) und G) ermittelten Daten.

Als besonders vorteilhaft erweist es sich hierbei, dass im Rahmen der Kalibrierung des Laserprojektors insgesamt nur ein Retroreflektor verwendet werden muss und dass selbst dieser eine Retroreflektor nicht zwingend an der Montagefläche angebaut werden muss. Alternativ zur vorstehend genannten Kalierbrierungsmethode für den Laserprojektor könnte jedoch auch auf eine Variante unter Verwendung einer Mehrzahl an Retroreflektoren zurückgegriffen werden, was indessen nicht so vorteilhaft ist.

Die in Schritt E) verlangte Bestimmung der Lage des Targets relativ zum Laserdistanzmessgerät kann in einer nochmals bevorzugten Weiterbildung des erfindungsgemäßen Verfahrens wiederum ausschließlich unter Verwendung des Laserdistanzmessgeräts erfolgen. Bei einem in seiner Geometrie bekannten Target kann durch Vermessung mehrerer Messpunkte auf dem Target die Relativlage des Targets zum Laserdistanzmessgerät (aus der sich auch diejenige zum Laserprojektor ergibt) berechnet werden (z.B. unter Verwendung eines "Best-Fit"-Algorithmus'). Da auch die Lage des Retroreflektors auf dem Target vorbekannt und somit präzise in ihrer Raumlage berechenbar ist, wird auch hier eine in besonderem Maße fehlervermeidende Methode zur präzisen Kalibrierung des Laserprojektors zur Verfügung gestellt.

Nachfolgend wird ein Ausführungsbeispiel der Erfindung anhand der Zeichnung näher erläutert. Dabei zeigt:
- Fig. 1: eine perspektivische Darstellung eines Aus- führungsbeispiels einer erfindungsgemäßen Projektionsvorrichtung,
- Fig. 2: eine perspektivische Darstellung der Vorrich- tung aus Fig. 1, die vor einer Montagefläche mittels eines Stativs aufgestellt ist,
- Fig. 3: eine Frontansicht auf das Gehäuse der Vor- richtung aus Fig. 1,
- Fig. 4: eine Seitenansicht im Schnitt durch das Ge- häuse aus Fig. 3 und
- Fig. 5: ein Target, welches sich zur Kalibrierung des Laserprojektors der erfindungsgemäßen Vor- richtung eignet.

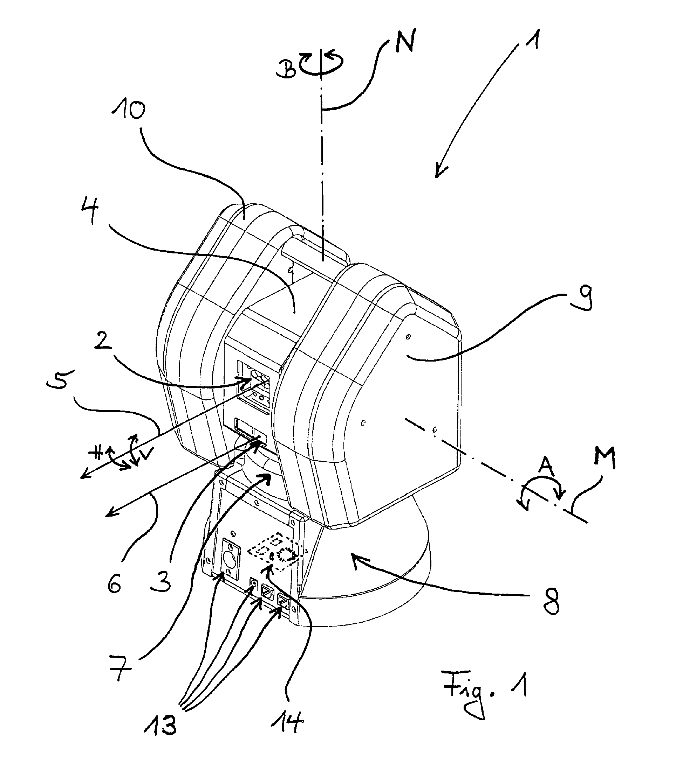

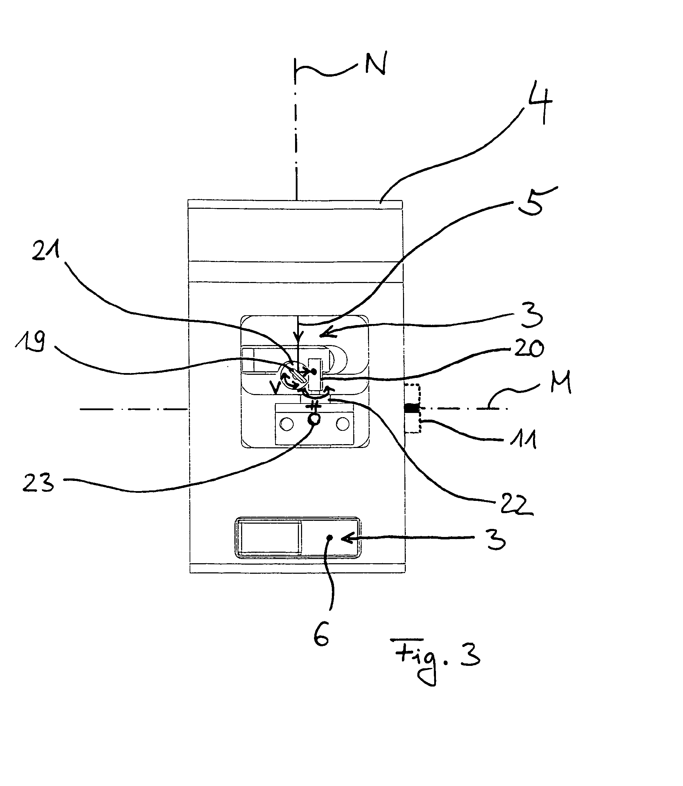

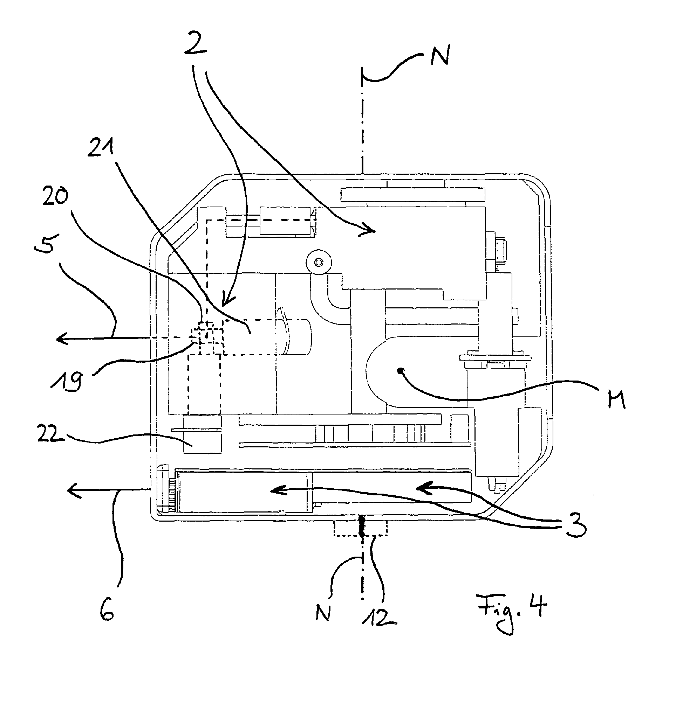

Die in Figur 1 dargestellte Laserprojektionsvorrichtung 1 umfasst einen einen ersten Laserstrahl 5 aussendenden Laserprojektor 2 und ein hierzu separates, einen zweiten Laserstrahl 6 aussendendes Laserdistanzmessgerät 3, die beide in einem gemeinsamen Gehäuse 4 der Vorrichtung 1 untergebracht sind. Mittels des von dem Laserprojektor 2 ausgesandten ersten Laserstrahls 5 kann ein Muster auf eine - in Fig. 1 nicht dargestellte - Montagefläche projiziert werden, indem der Laserstrahl 5 gemäß des Doppelpfeils H in horizontaler und gemäß des Doppelpfeils V über einen vorgegebenen Winkelbereich von jeweils bevorzugt ca. ±30° verschwenkt werden kann. Hierzu dienen die mit Galvanometern verbundenen Spiegel, die in den Fig. 3 und 4 gezeigt und weiter unten näher erläutert sind. Der vorgenannte Winkelbereich bestimmt den maximalen Projektionsbereich des Laserprojektors 2 (bei vorgegebenen Stellung der Antriebseinheit). Das Laserdistanzmessgerät 3 ist wie auch der Laserprojektor 2 innerhalb des Gehäuses 4 fest montiert, so dass Laserprojektor 2 und Laserdistanzmessgerät 3 relativ zueinander lagefest angeordnet sind. Der zweite Laserstrahl 6, welcher von dem Laserdistanzmessgerät 3 ausgesendet wird, ist im Hinblick auf seine in Fig. 1 gezeigte Austrittsrichtung (aus dem Laserdistanzmessgerät 3 bzw. aus dem Gehäuse 4) fest und unverstellbar vorgegeben und kann damit nicht ohne Gesamtverschwenkung des Laserdistanzmessgeräts 3 verstellt werden.

Die Vorrichtung weist ferner eine Antriebseinheit auf, mittels derer der Laserprojektor 2 und das Laserdistanzmessgerät 3 zusammen mit dem Gehäuse 4 gemeinsam um zwei verschiedene Achse M und N gemäß der Doppelpfeile A, B verschwenkt bzw. rotiert werden können. Die Antriebseinheit besteht aus (wenigstens) zwei hochpräzise stellbaren Stellmotoren 11, 12, von denen ein erster 12 (gestrichelt in Fig. 4 angedeutet) zur Rotation bzw. Verschenkung des Gehäuses 4 um die vertikal verlaufende Achse N in dem oberen Bereich 7 des unter dem Gehäuse angeordneten Sockels 8 angeordnet ist. Die Rotation bzw. Verschwenkung des Gehäuses 4 um die horizontale Achse M erfolgt mittels eines zweiten Stellmotors, der wahlweise in einer der beiden dem Gehäuse 4 von verschiedenen Seiten anliegenden Gehäuseschalen 9, 10 angeordnet ist. Jeder Stellmotor 11, 12 umfasst einen - nicht dargestellten - Winkeldecoder, mit dem die gegebene Winkellage der Stellung des jeweiligen Stellmotors 11, 12 mit hoher Präzision bestimmbar ist. An dem Sockel 8 sind ferner mehrere elektrische (Daten-/Strom-) Schnittstellen 12 vorgesehen, die mit der in den Sockel 8 integrierten und lediglich gestrichelt dargestellten Datenverarbeitungseinrichtung 14 verbunden sind, so dass diese mit einer externen Datenverarbeitungsanlage verbindbar ist.

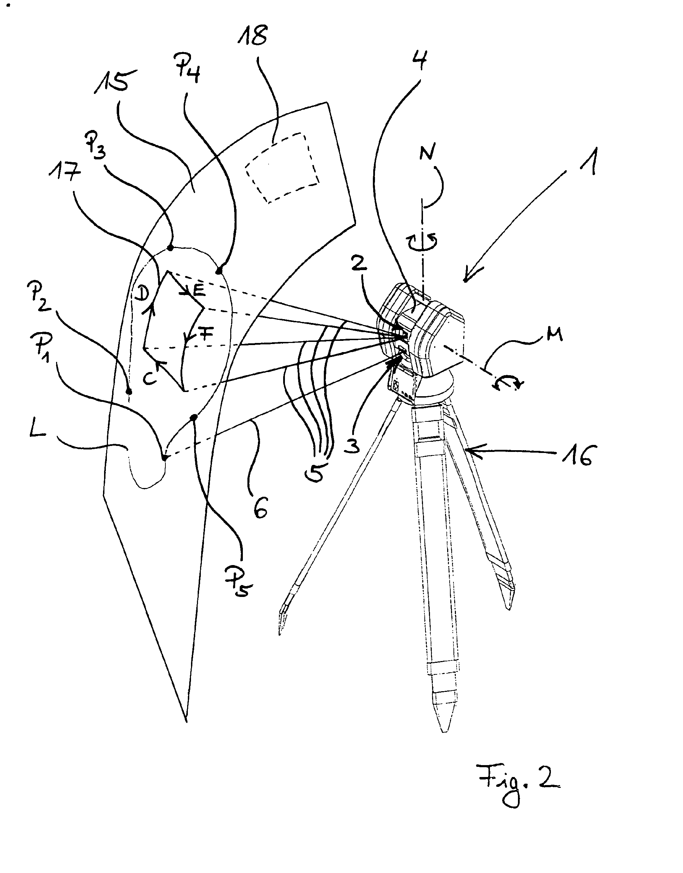

Figur 2 zeigt nochmals eine perspektivische Ansicht der bereits in Zusammenhang mit Fig. 1 beschriebenen Vorrichtung 1, welche vorliegend im Bereich einer sich dreidimensional erstreckenden Montagefläche 15 mittels eines Stativs 16 aufgestellt ist. Der von dem Laserdistanzmessgerät 3 ausgesandte Laserstrahl 6 wird punktförmig (Punkt P) auf der Montagefläche 15 abgebildet, während der von dem Laserprojektor 2 ausgesandte Laserstrahl 5 kontinuierlich und mit hinreichender Frequenz zur Erzeugung eines stehenden Musters 17 längs der Pfeile C, D, E, F über die Montagefläche 17 geführt wird. Das Muster 17 stellt vorliegend z.B. eine Umrissskizze für die exakte Position eines an der Montagefläche 17 anzubauenden Anbauteils dar. Das weitere Muster 18 (nur gestrichelt dargestellt) liegt bei der momentanen Stellung der die Rotation des Gehäuses 4 um die Achsen N, M vorgebenden Antriebseinheit 11, 12 außerhalb des maximalen Projektionsbereichs des Laserprojektors 2, so dass das Gehäuse 4 der Vorrichtung 1 nach Abschluss des ersten Montagearbeitsschritts im Bereich des ersten Musters 17 mittels der Antriebseinheit 11, 12 so weit verschwenkt werden kann, dass das zweite Muster 18 von dem Laserprojektor 2 auf die Montagefläche 15 projiziert werden kann.

Zur Bestimmung der relativen Raumlage zwischen Laserdistanzmessgerät 3 und Montagefläche 15 wird das Gehäuse 4 derart mittels der Antriebseinheit 11, 12 verschwenkt, dass z.B. der Laserstrahl 6 des Laserdistanzmessgeräts 2 der Trajektorie L auf der Montagefläche 15 folgt. Während dieser Bewegung können eine Mehrzahl an frei wählbaren Messpunkten P1, P2, P3, P4, P5, etc. ausgewählt und hinsichtlich ihrer jeweiligen Distanz zum Laserdistanzmessgerät 3 und der konkreten Winkellage der beiden Stellmotoren 11, 12, aus denen sich der jeweilige Richtungsvektor des Laserstrahls 6 zu dem jeweiligen Punkt berechnen lässt, vermessen werden. Legt man nun die gewonnenen Messpunkte P1, ..., P5 in ein Koordinatensystem, so kann man innerhalb des Koordinatensystems mittels eines "Best-Fit"-Algorithmus die Raumlage der in ihrer Geometrie vorbekannten Montagefläche 15 relativ zum Laserdistanzmessgerät 3 bestimmen, wodurch- umgekehrt - auch gleich die relative Raumlage des Laserdistanzmessgeräts 3 zur Montagefläche 15 berechenbar ist. Hiervon ausgehend lässt sich durch einfache Koordinatentransformation auch die relative Raumlage des Laserprojektors 2 zur Montagefläche 15 berechnen, so dass eine exakte Projektion des vorgegebenen Musters 17 auf den hierfür vorgesehenen Bereich der Montagefläche 15 durchgeführt werden kann.

Fig. 3 zeigt eine Frontansicht auf das Gehäuse 4, in welcher die beiden Spiegel 19, 20 zu sehen sind, mittels derer der Laserstrahl 5 unter Zuhilfenahme der die Spiegel 19, 20 tragenden Galvanometer 21, 22 verstellt werden kann. Der links dargestellte und gemäß Doppelpfeil V verstellbare Spiegel 19 dient der Verstellung des aus dem Laserprojektor 2 austretenden Laserstrahls 5 in vertikaler Richtung, während der rechts dargestellte und gemäß Doppelpfeil H verstellbare Spiegel 20 der Ablenkung des Laserstrahls in einer horizontalen Richtung dient. Ferner ist an der Frontseite des Gehäuses 4 eine Fotodiode 23 zu erkennen, die in bekannter Weise zur präzisen und automatischen Ausrichtung des Laserstrahls 5 auf einen Retroreflektor verwendet werden kann.

Fig. 4 zeigt noch einen seitlichen Einblick in das Gehäuse 4, aus dem gut erkennbar ist, dass der Laserprojektor 2 und das Laserdistanzmessgerät 3 vollständig separat voneinander ausgebildet sind und jeweils über eine eigene Laserquelle verfügen.

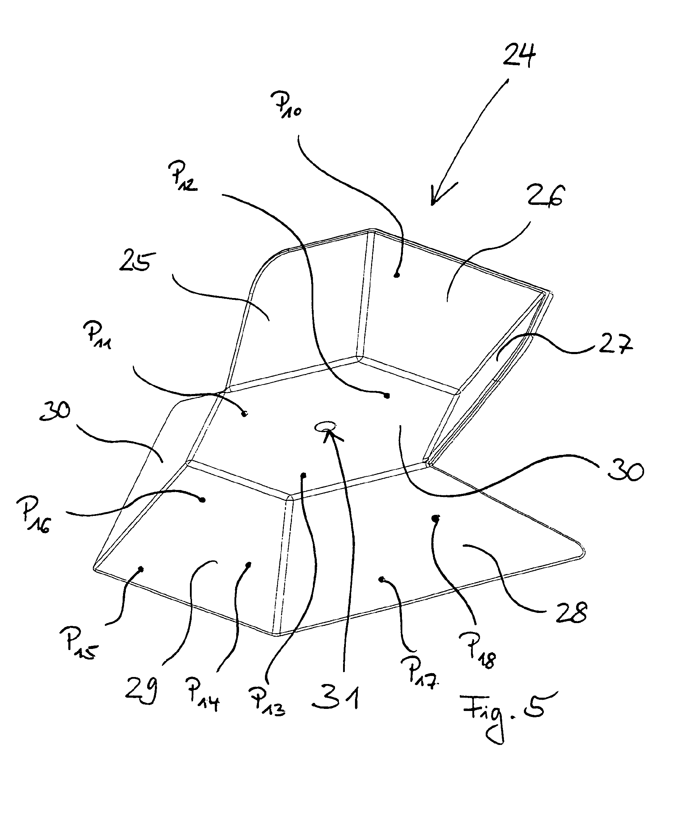

Fig. 5 zeigt schließlich noch das im Rahmen der vorliegenden Erfindung bevorzugt zu verwendende Target 24, welches eine Mehrzahl an in verschiedenen Richtungen geneigten Ebenen 25 - 30 aufweist, wobei exakt im Zentrum der horizontal verlaufenden Ebene 30 ein Retroreflektor 31 angeordnet ist, auf den sich der Laserstrahl 5 des Laserprojektors 2 automatisch ausrichten kann, nachdem durch Vermessung einer Mehrzahl an Messpunkten (hier beispielsweise P10-P18) mittels des Laserdistanzmessgeräts eine Bestimmung der relativen Raumlage zwischen Target 24 und Laserdistanzmessgerät 3 durchgeführt wurde. Dies kann in gleicher Weise wie die Bestimmung der Relativlage zur Montagefläche erfolgen, nämlich unter Auswertung eines "Best-Fits" der bekannten Targetgeometrie in die Messpunkte P10-P18. Ferner ist dann aus der bekannten Position des Retroreflektors 31 auf dem Target 24 auch dessen relative Lage zum Laserdistanzmessgerät und zum Laserprojektor berechenbar.

Das Target 24 kann dann, ohne dass es an der Montagefläche 15 befestigt oder sonstwie verschoben werden müsste, in der vorbeschriebenen Art und Weise zur (automatischen) Kalibrierung des Laserprojektors herangezogen werden.

## Patentansprüche

1. Vorrichtung zur Projektion eines vorgegebenen Musters auf eine in ihrer Geometrie vorbekannte Montagefläche, umfassend
- einen Laserprojektor zur Projektion des Musters auf die Montagefläche,
- ein separates und auf dem Prinzip der Laufzeitmessung eines diffus reflektierten Laserstrahls basierendes Laserdistanzmessgerät, das mit dem Laserprojektor lagefest verbunden ist, wobei die Austrittsrichtung des das Laserdistanzmessgerät verlassenden Laserstrahls fest und unverstellbar vorgegeben ist,
- eine Antriebseinheit mittels derer der Laserprojektor und das Laserdistanzmessgerät gemeinsam um zwei verschiedene Achsen in eine spezifisch vorgebbare Winkellage verschwenk- bzw. rotierbar sind und
- wenigstens eine Datenverarbeitungseinrichtung zur Steuerung des Laserprojektors, des Laserdistanzmessgeräts und der Antriebseinheit,
wobei das Laserdistanzmessgerät und die Datenverarbeitungseinrichtung dazu eingerichtet sind, unter Vermessung der Distanz und Richtung des von dem Laserdistanzmessgerät ausgestrahlten Laserstrahls zu einer Mehrzahl an geeignet auf der Montagefläche zu wählenden Messpunkten die relative Orientierung und Lage zwischen Laserdistanzmessgerät und Montagefläche zu berechnen.

2. Vorrichtung nach Anspruch 1,
**dadurch gekennzeichnet,**
**dass** der Laserprojektor und das Laserdistanzmessgerät innerhalb eines gemeinsamen Gehäuses der Vorrichtung angeordnet sind.

3. Vorrichtung nach einem der vorangehenden Ansprüche,
**dadurch gekennzeichnet,**
**dass** die Vorrichtung ein einen Retroreflektor aufweisendes Target umfasst und zum Zwecke der Kalibrierung des Laserprojektors zur Durchführung der folgenden Schritte eingereichtet ist:
i) Positionieren des einen Retroreflektor aufweisenden Targets an einer beliebigen Stelle innerhalb des Projektionsbereichs des Laserprojektors und Bestimmen der Lage des Targets undder Lage des Retroreflektors relativ zum Laserdistanzmessgerät
ii) Automatisches Ausrichten des Laserstrahls des Laserprojektors auf den Retroreflektor und Bestimmen des Richtungsvektors des Laserstrahls in Bezug auf den Laserprojektor
iii) Nacheinander mehrfaches Ändern der Stellung der Antriebseinheit, wobei der Laserstrahl des Laserprojektors in jeder Stellung der Antriebseinheit erneut auf den ortsfest belassenen Retroreflektor ausgerichtet wird und anschließend der Richtungsvektor des Laserstrahls in Bezug auf den Laserprojektor bestimmt wird
iv) Kalibrieren der zur Projektion eines Laserstrahls auf die Montagefläche notwendigen Steuersignale für den Laserprojektor unter Auswertung der in Schritt ii) und iii) ermittelten Daten.

4. Verfahren zur Projektion eines vorgegebenen Musters auf eine in ihrer Geometrie vorbekannte Montagefläche unter Verwendung einer Vorrichtung nach Anspruch 1, umfassend die folgenden Schritte:
A) Aufstellen der Vorrichtung im Bereich der Montagefläche
B) Nacheinander erfolgendes Ausrichten des Laserstrahls des Laserdistanzmessgeräts auf verschiedene geeignet zu wählende Messpunkte der Montagefläche, indem die Antriebseinheit entsprechend verfahren wird, bis der Laserstrahl den jeweiligen Messpunkt trifft, und jeweils Bestimmung der Stellung der Antriebseinheit, der sich hieraus ergebenden Richtung des Laserstrahls sowie der Entfernung des Messpunkts von dem Laserdistanzmessgerät
C) Berechnen der Lage und Orientierung des Laserdistanzmessgeräts relativ zur Montagefläche aus den in Schritt B) gewonnenen Daten
D) Projizieren des Musters auf die Montagefläche mittels des Laserprojektors

5. Verfahren nach Anspruch 4,
**dadurch gekennzeichnet,**
**dass** zumindest vor der ersten Projektion eines Musters auf die Montagefläche zum Zwecke der Kalibrierung des Laserprojektors folgende Schritte durchgeführt werden:
E) Positionieren eines einen Retroreflektor aufweisenden Targets an einer beliebigen Stelle innerhalb des Projektionsbereichs des Laserprojektors und Bestimmen der Lage des Targets und des Retroreflektors relativ zum Laserdistanzmessgerät
F) Automatisches Ausrichten des Laserstrahls des Laserprojektors auf den Retroreflektor und Bestimmen des Richtungsvektors des Laserstrahls in Bezug auf den Laserprojektor
G) Nacheinander mehrfaches Ändern der Stellung der Antriebseinheit, wobei der Laserstrahl des Laserprojektors in jeder Stellung der Antriebseinheit erneut auf den ortsfest belassenen Retroreflektor ausgerichtet wird und anschließend der Richtungsvektor des Laserstrahls in Bezug auf den Laserprojektor bestimmt wird
H) Kalibrieren der zur Projektion eines Laserstrahls auf die Montagefläche notwendigen Steuersignale für den Laserprojektor unter Auswertung der in Schritt F) und G) ermittelten Daten

6. Verfahren nach Anspruch 5,
**dadurch gekennzeichnet,**
**dass** die in Schritt E) genannte Bestimmung der Lage des Targets relativ zum Laserdistanzmessgerät ausschließlich unter Verwendung des Laserdistanzmessgeräts erfolgt.
